# EUROPEAN PATENT APPLICATION

(11) **EP 0 894 564 A2**
(43) Date of publication of application: **03.02.1999**
(21) Application number: 98830312.9
(22) Date of filing: 21.05.1998
(51) Int. Cl.: B23Q 1/25, B23Q 1/66

(54) **Rotating support for a machine tool**

(30) Priority: 25.07.1997 IT FI970180
(71) Applicant: Giannini, Bruno, 53049 Torrita di Siena (Siena) (IT)
(72) Inventor: Giannini, Bruno, 53049 Torrita di Siena (Siena) (IT)
(74) Representative: Bardini, Marco Luigi

(57) **Abstract**

A support for a machine tool comprising a machine bed (3), a prismatic element (1) with a triangular shaped transversal section, pivotally connected to the machine bed (3), said element (1) having a base face (la) and two supporting faces (1b, 1c) for workpieces (12) to be machined, and means for fixing the workpieces (12) to the supporting faces (1b, 1c). Prismatic element (1) is movable between two positions angularly displaced by 180° with respect to a rotation axis (4) which is orthogonal to the common edge (2) of supporting faces (1b, 1c) and passes through the mean point of said edge (2). Axis (4) is placed so that in each of said positions a respective supporting face (1b, 1c) is substantially horizontal.

## Description

The present invention relates to the field of machine tools, and more specifically it concerns a rotating support for use in particular, but not exclusively, in a machine tool for the machining of wood panels.

In the wood-working industry, and in particular in that of furniture manufacturing, machining is very often required on panels made of solid wood, of wood chipboard, or plywood, consisting in drillings and millings for smoothing and for routing (possibly by pantographs). For this purpose machine tools are used, generally automatically controlled, with conventional mechanic tools or LASER ones, provided with a tool-supporting head and a machining table on which the panels are supported.

In order to speed up the work, these machines are usually designed to allow the so-called "hiding" of idle times. That is, while the machine is machining one or more panels, the operator can carry out the unloading of the already machined panels and the loading of the panels to be machined in the next step. To make it possible, the machines now in use have essentially three types of structure.

A first type comprises a fixed horizontal machining table, divided into two adjacent areas, with a vertical axis tool-supporting head, provided with the three elementary Cartesian movements to allow the alternative machining of the workpieces mounted on either areas of the table. The unloading of the machined pieces and the loading of those to be machined are carried out in the area which in turn is not occupied by the machining head.

This solution has the drawback that for encumbrance reasons the dimensions of the table have to be limited. Besides, owing to the fact that there are two distinct machining areas, the operator, for not having to perform continual movements, is compelled to create two loading and unloading tempcrary stores next to each area, further increasing the occupied room. Moreover, he has to work close to the tool-supporting heads and so he is directly exposed to machining dusts and noises, as well as to the danger related to the possible ejection of wood chips or of the tools.

In a second type of solution two horizontal supporting tables are provided, slidable along respective axis, parallel to each other, between a machining position and a loading/unloading one. As in the previous case a vertical axis tool-supporting head is horizontally slidable along an axis which is perpendicular to those of the tables, whereby the head can stop in turn in correspondence to the machining position of one of them. When the head is machining panels on one of the two tables, placed in its machining position, the other table slides to the loading/unloading position, so as to let an operator take away the already machined panels and load new panels to be machined.

This solution has drawbacks completely analogous to the previous one, since for functional and encumbrance reasons the sliding of the tables has to be limited and in any case the operator arranges the panels in an uneasy and dangerous position.

In a third type of solution a rotating support is provided, having the shape of a equilateral triangular based prism. The support is placed with its longitudinal axis in a horizontal position and can perform subsequent angular displacements around said axis, of a third of a round angle each, to present in turn one of its faces, inclined by 60° with respect to the ground plane, towards a tool-supporting head, orthogonally placed with respect to said face and so with a correspondingly inclined axis. While the head is machining the panels on one face, the operator can carry out the unloading and loading operations on the opposite side inclined face.

This solution has drawbacks related to the inclined position of the tool-supporting head. In fact, to make the big and heavy head move on an inclined plane with the smoothness and precision that are required for this kind of machining, it is necessary that large sized engines and complicated weight-balancing systems be used, with consequently higher constructive and maintenance costs.

Besides, since the prismatic support always turns in the same direction, expensive manifolds coaxial to the support have to be used, to supply the machining planes with the necessary feeding means (compressed air, electricity, vacuum).

Finally, one side of the prismatic support is in turn unemployed, with a lack of productivity from a usable face, as well as energy waste, because said face, on which machined panels waiting to be unloaded are placed, is in any case kept fed with the above cited means. After all, the machines which choose this type of solution require the use of extremely expensive parts and of high specific power engines.

The object of the present invention is to solve the above described problems, providing a support for the workpieces to be machined in a machine of the above cited kind, but also in other kinds of machine tool, which allows to "hide" the loading and unloading operations behind the machining steps, in easy and safe conditions for the operator, and to keep the machining plane in a substantially horizontal configuration.

This object has been achieved with the rotating support for a machine tool according to the present invention, which comprises a machine bed, a prismatic element, with a triangular shaped transversal section, pivotally connected to the machine bed, said element having a base face and two supporting faces for workpieces to be machined, and means for fixing the workpieces to the supporting faces. The prismatic element is movable between two positions angularly displaced by 180° with respect to a rotation axis which is orthogonal to the common edge of the supporting faces and passes through the mean point of said edge, the axis being placed so that in each of said positions a respective supporting face is substantially horizontal.

Other features and advantages of the rotating support according to the present invention will be apparent from the following description of a preferred embodiment, made purely as an example and implying no limitation, with reference to the accompanying drawings, in which:
- Figure 1 illustrates a side view, with some sectioned parts, of the rotating support according to the invention, a tool-supporting head of a machine on which the support is mounted being also shown;
- Figure 2 shows a perspective view of the support of figure 1, with a schematic representation of tool-supporting heads of the machine;
- Figure 3 shows a side view similar to that of figure 1 of a slightly different embodiment of the supporting head according to the invention.

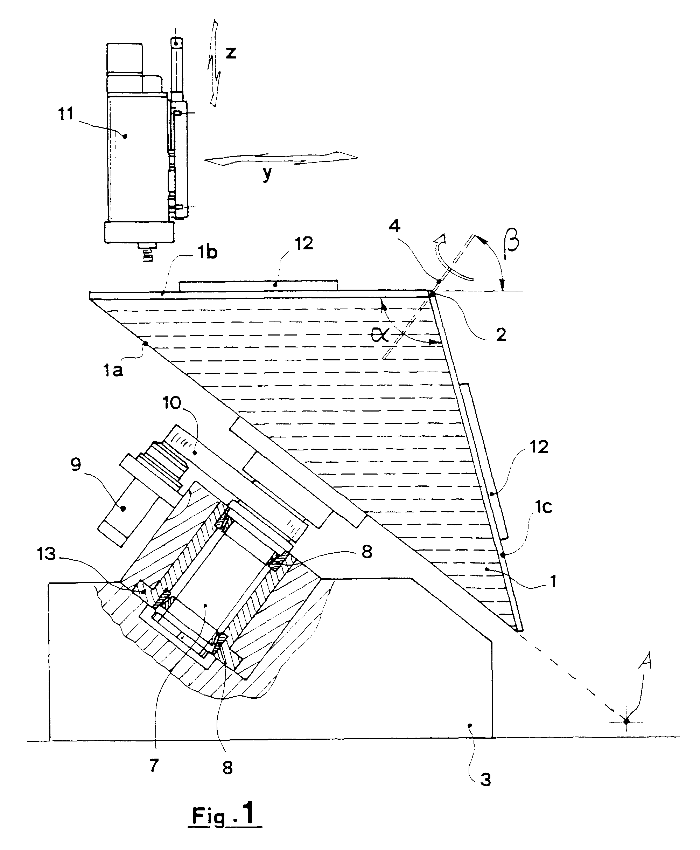

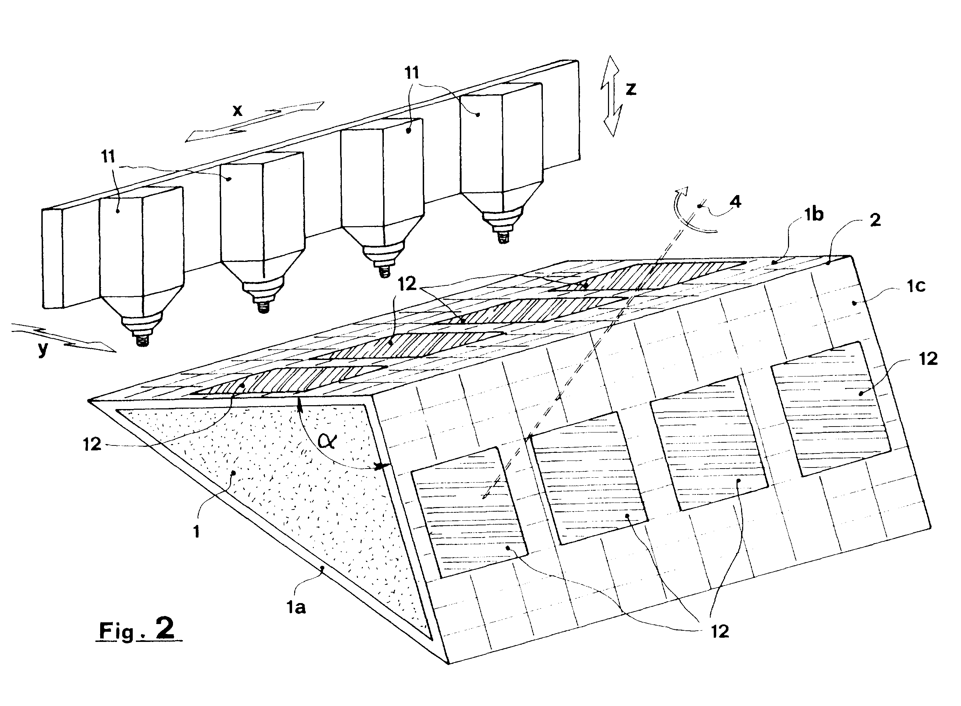

With reference to figures 1 and 2, in the depicted embodiment the support according to the invention is mounted on a machine for machining wood panels 12, neither described in detail nor shown on the whole since it is of a conventional kind, and comprises a machine bed 3 upwardly supporting a prismatic element 1, having a generically triangular shaped transversal section. In particular the element shown has an isosceles triangular section, with a base face la corresponding to the base side of the triangle and two faces 1b and 1c, corresponding to its oblique sides, for supporting the panels to be machined and which hereinafter will be indicated as supporting faces, adjacent to each other along a common edge 2. Element 1, the longitudinal axis of which is placed horizontally, is pivotally connected to bed 3 around an inclined axis 4, orthogonal to edge 2 and passing through its mean point, so as to be able to assume two positions angularly displaced by 180°, in each of them one of the two supporting faces 1b and 1c in turn being placed horizontally.

Inclined axis 4 has then an inclination β with respect to the ground plane whereby it belongs to the bisecting plane of the angle comprised between supporting faces 1b and 1c, indicated at *a* in the figures. If in particular, as in the figures, the triangle is isosceles, axis 4 is orthogonal to base face 1a. Accordingly, angle α can have any width comprised between a minimum value of 90° and a maximum of less than 180°, provided β has correspondingly a suitable width, even if, as made clearer hereinafter, a correct choice of the value of α is important for a good operation of the support.

The pivotal connection between element 1 and machine bed 3, shown in particular in figure 1, comprises a shaft 7 of axis 4, and then orthogonally and centrally extending from base face 1a. Shaft 7 is pivotally engaged via a couple of roller bearings 8 with a bush 13 coaxially mounted on machine bed 3. A geared motor 9 is fixed on machine bed 1 with its axis parallel to shaft 7, and, by means of a belt drive 10, rotates a pulley, not shown, keyed to the same shaft.

Tool means of the machine are placed over element 1, in the depicted embodiment consisting of a number of tool-supporting heads 11, having vertical rotation axis spindles. Heads 11 are placed in correspondence to the supporting face which is in turn horizontal, for carrying out the machining of panels 12 mounted thereon, and are movable along three orthogonal directions, indicated in the figures at X, Y and Z, direction X being parallel to edge 2 and direction Y being orthogonal thereto.

The support according to the invention operates in the following way. Some panels to be machined, four in figure 1 correspondingly to the number of heads 11, are at first placed by an operator on the non-horizontal supporting face, on which they are fixed by means of a known method, e.g. by way of a suction system.

A clockwise rotation of element 1 around axis 4 takes the supporting face with the panels in a horizontal position below heads 11 and the other supporting face in front of the operator. While heads 11, moving along axis X, Y an Z and possibly automatically controlled, carry out the required machining, the operator loads new panels to be machined on the free supporting face, so that once the machining step is over, the counter-clockwise rotation of element 1 takes the panels to be machined below the heads. The machined panels are unloaded from the respective supporting face, at this point placed in front of the operator, who can go on to a new loading to repeat the described sequence.

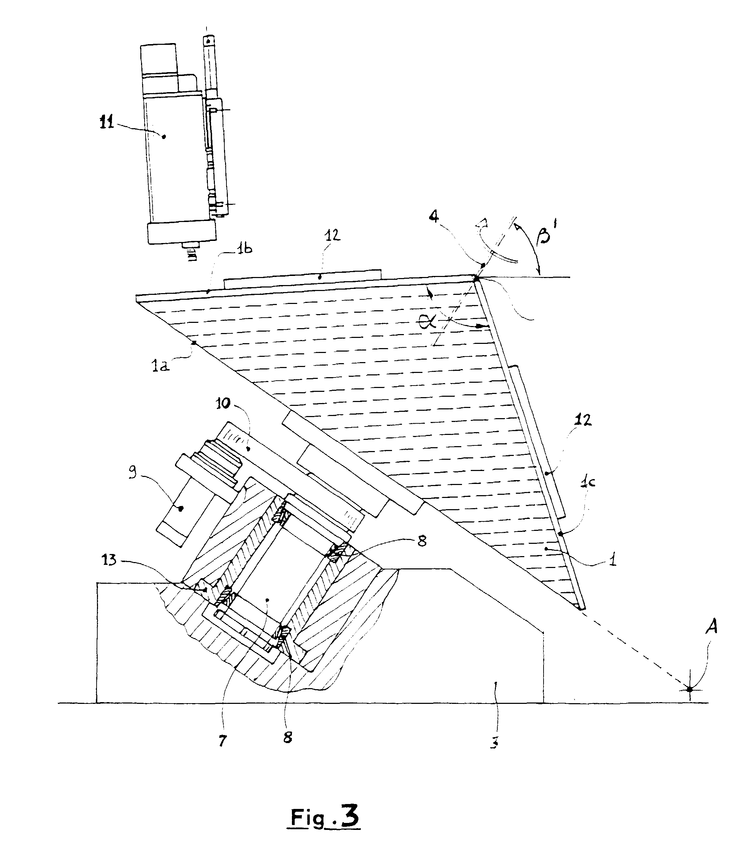

To avoid any interference between element 1, which in the rotation step reaches the point schematically indicated at A in figure 1, and the ground, machine bed 3 must support element 1 at a suitable height. If the overall vertical dimensions of the support have to be limited, for instance in case of use inside low roof sheds, the solution shown in figure 3 can be chosen.

According to this slightly different embodiment element 1 is supported so that the machining plane, and so a respective supporting face 1b and 1c in turn, is not exactly horizontal but slightly inclined (maximum by 15°), by way of a suitable value of angle β' of rotation axis 4. Thanks to this, point A reached by element 1 during its rotation is nearer in height to the machining plane and so machine bed 3 can be lowered, supporting element 1 in a configuration having limited overall vertical dimensions.

The inclination of the machining plane has to be lower than the above cited value, not to cause drawbacks related to dynamic stresses on the machining heads, inclined as well, of the kind described in connection with the prior art. Though with few degree inclinations these drawbacks are of a little importance, it will be apparent that where there is no particular need for an overall lowering of the support, the solution with a horizontal machining plane has to be considered as the preferred one.

The panels to be machined can be placed on the respective face by way of fixing means, not shown, integral to machine bed 3 or to each supporting face 1b and 1c.

For obvious reasons of structural and operation balance an isosceles triangular section is particularly advantageous for element 1. For a machine tool of the above described kind, a good choice for the width of angle α is about 105°. In this way the position of the operator, besides not being much tiring, is extremely safe, since the machining and the loading/unloading planes are placed not to actually allow the straight contact between the machining area and the working area.

The foregoing clearly shows that the support according to the invention is characterised by a high degree of intrinsical safety. The machine tool provided with the support has in any case to be equipped with a protection cab (ejection-safe and intrusion-safe), placed in correspondence to the machining heads to avoid the scattering of machining shavings in the surrounding. Photo-electric screens or sensitive mats can be provided to avoid dangerous intrusions during the rotation step of element 1. A suction system of a known kind can also be provided for collecting the shavings. Moreover, it will be apparent that the reciprocating rotation in opposite directions of element 1 allows the use of completely conventional energy-supply manifolds.

The loading/unloading area is free from encumbrances and is then fit for the equipment of an automatic workpiece loading and unloading system. The support is then employable in entirely automated machining booths. The versatility and productivity of the equipped machine can be further increased by equipping each supporting face of element 1 with an upper rotating table, angularly displaceable around an axis orthogonal to the face itself.

Even if reference was made namely to wood machining and to a use of the support in a panel-machining machine tool, the support according to the invention can be employed in a different machine tool from that above described and in a number of other machines, e.g. forging presses and painting machines.

The support according to the invention provides then a fully satisfactory solution to the problems concerned with the systems now in use for analogous objects. It is structurally and operatively very simple, allowing the achievement of a high ratio between the surface area of the machining table and the occupied surface area on the ground, with engines of a much lower specific power than those of known machines having a similar productivity.

Variations and/or modifications can be brought to the rotating support according to the present invention, without departing from the scope of the invention itself as defined by the appended claims.

## Claims

1. A support for a machine tool comprising a machine bed (3), a prismatic element (1) with a triangular shaped transversal section, pivotally connected to said machine bed (3), said element (1) having a base face (1a) and two supporting faces (1b, 1c) for workpieces (12) to be machined, and means for fixing the workpieces (12) to said supporting faces (1b, 1c), characterised in that said prismatic element (1) is movable between two positions angularly displaced by 180° with respect to a rotation axis (4) which is orthogonal to the common edge (2) of said supporting faces (1b, 1c) and passes through the mean point of said edge (2), said axis (4) being placed so that in each of said positions a respective supporting face (1b, 1c) is substantially horizontal.

2. The support according to claim 1, wherein said triangular transversal section is isosceles, the equal sides being those corresponding to said supporting faces (1b, 1c).

3. The support according to claim 2, wherein a shaft (7) orthogonally extends from said base face (1a), said shaft (7) being pivotally engageable with a bush (13) mounted on said machine bed (3), motor means (9, 10) being also provided for controlling the angular displacement of said element (1), comprising an engine (9) mounted on said machine bed (3) and means (10) for driving said shaft (7).

4. The support according to any of the previous claims, wherein the angle (α) comprised between said supporting faces (1b, 1c) is about 105° wide.

5. The support according to any of the previous claims, wherein on each of said supporting faces (1b, 1c) a respective upper rotating table is provided, angularly displaceable around an axis orthogonal to the face itself.

6. The support according to any of the previous claims, to equip a wood panel machining machine tool.

7. The support according to claim 6, wherein said fixing means are suction means.
